# EUROPÄISCHE PATENTANMELDUNG

(11) **EP 4 660 977 A1**
(43) Veröffentlichungstag der Anmeldung: **10.12.2025**
(21) Anmeldenummer: 25176385.0
(22) Anmeldetag: 14.05.2025
(51) Int. Cl.: G07D 7/121, G06V 10/143

(54) **DOKUMENTENAUFNAHMEGERÄT MIT VARIABLEM FOKUS, DOKUMENTENPRÜFSYSTEM, VERFAHREN ZUM OPTISCHEN AUFNEHMEN EINES DOKUMENTS, VERFAHREN ZUM PRÜFEN EINES DOKUMENTS**

(30) Priorität: 05.06.2024 DE 102024115693
(71) Anmelder: Bundesdruckerei GmbH, 10969 Berlin (DE)
(72) Erfinder: Herrmann, Dr. Klaus, 30625 Hannover (DE); Rabeler, Uwe, 30453 Hannover (DE); Thater, Marcel, 30952 Ronnenberg (DE)
(74) Vertreter: Richardt Patentanwälte PartG mbB

(57) **Zusammenfassung**

Offenbart ist ein Dokumentenaufnahmegerät (100) zur optischen Erfassung eines Dokuments (102) mit folgenden Merkmalen:
- eine Kamera, wobei die Kamera (110) einen Bildsensor (112) und eine Optik (114) aufweist, wobei die Optik (114) einen einstellbaren Fokus aufweist,
- ein Beleuchtungsmittel (120), wobei das Beleuchtungsmittel (120) zum Beleuchten mit zumindest zwei unterschiedlichen Wellenlängenbereichen konfiguriert ist,
- eine Dokumentenhalterung (130),
- eine elektronische Steuerung, wobei die elektronische Steuerung so konfiguriert ist, dass sie die Kamera (110) und das Beleuchtungsmittel (120) zumindest für eine erste Aufnahme mit Beleuchtung in einem ersten Wellenlängenbereich und einem ersten Fokus und für eine zweite Aufnahme mit Beleuchtung in einem zweiten Wellenlängenbereich und einem zweiten Fokus ansteuern kann.

Offenbart ist zudem ein Dokumentenprüfsystem (200), welches ein Dokumentenaufnahmegerät (100) und eine elektronischen Auswertungsvorrichtung (210) umfasst, wobei die elektronische Auswertungsvorrichtung (210) so konfiguriert ist, dass sie die Aufnahmen empfangen und auswerten kann.

## Beschreibung

### GEBIET DER TECHNIK

Die Erfindung betrifft ein Dokumentenaufnahmegerät mit variablem Fokus, ein Dokumentenprüfsystem, ein Verfahren zum optischen Aufnehmen eines Dokuments und ein Verfahren zum Prüfen eines Dokuments.

### STAND DER TECHNIK

Dokumentenaufnahmegerät werden zur optischen Erfassung von Dokumenten eingesetzt, die mit bestimmten optisch erfassbaren Echtheitsmerkmalen versehen sind, z.B. hoheitliche Identitätsdokumente wie ID-Karten oder Pässe, Visa, Führerscheine, Kraftfahrzeugbriefe, Banknoten oder andere Urkunden. Solche Dokumentenaufnahmegeräte werden bevorzugt in Behörden oder an Grenzkontrollstellen wie z.B. Flughäfen oder auch mobil in Fahrzeugen verwendet. In Verbindung mit einem Computer kann so bspw. die Echtheit der Dokumente geprüft werden. Dokumentenaufnahmegerät weisen üblicherweise eine Kamera mit einer Optik und eine Beleuchtungseinheit auf, wobei die Optik so ausgelegt ist, dass auch Details bei unterschiedlichen Beleuchtungen des Dokuments wie beispielsweise mit Infrarotlicht (IR) oder Weißlicht erfasst werden können, auch weil bestimmte Echtheitsmerkmale bspw. nur bei Beleuchtung mit IR bzw. Weißlicht optisch erfassbar sind.

Die Optiken in üblichen Dokumentenaufnahmegeräten sind entweder als Achromate oder Apochromate konstruiert. Ein Achromat ermöglicht die scharfe Abbildung von zwei Wellenlängenbereichen, beispielsweise denen, die den Farben Gelb und Grün entsprechen, in einem einzigen Fokus. Ein komplexer aufgebauter Apochromat hingegen ist so gestaltet, dass er drei Wellenlängenbereiche, die etwa den Farben Gelb, Grün und Rot entsprechen, im selben Fokus scharf abbilden kann. Diese Anordnungen sind für die Verbesserung der Abbildungsqualität im sichtbaren Spektrum konzipiert. Gleichzeitig wird aber der für die Überprüfung bestimmter Echtheitsmerkmale kritische Infrarot-Bereich (IR) nicht scharf abgebildet. Dies liegt daran, dass der ideale Fokus, also der Punkt mit der höchsten Abbildungsschärfe, für unterschiedliche Wellenlängen(bereiche), wie bspw. IR-Licht und Weißlicht, in unterschiedlichen Ebenen liegt. Eine Anpassung der Optik nach dem Prinzip von Achromaten oder Apochromaten, also der Korrektur chromatischer Aberrationen, um zusätzlich einen vierten Wellenlängenbereich scharf zu stellen, stößt auf physikalische Grenzen und wäre nur äußerst aufwändig zu realisieren.

Die Optiken üblicher Dokumentenaufnahmegeräte sind deshalb so fokussiert, dass bei der Fokuseinstellung ein Kompromiss zwischen dem Fokus bei einer Beleuchtung mit IR- und der Beleuchtung mit Weißlicht verwendet wird. Dazu wird bspw. die maximale Schärfe bei Weißlicht etwas reduziert und der Fokuspunkt etwas in Richtung einer noch guten Infrarotdarstellung verschoben. Ein solcher Kompromiss führt allerdings dazu, dass sowohl die optische Aufnahme unter Weißlicht als auch die optische Aufnahme unter Infrarotlicht jeweils nicht bei idealem Fokus erfolgt, was wiederum die maximal erreichbare Schärfe reduziert.

### ZUSAMMENFASSUNG

Es ist eine Aufgabe der Erfindung, ein verbessertes Dokumentenaufnahmegerät mit einem entsprechenden Verfahren sowie ein Dokumentenprüfsystem mit entsprechendem Verfahren bereitzustellen. Die der Erfindung zugrunde liegenden Aufgaben werden durch die Merkmale der unabhängigen Ansprüche gelöst. Vorteilhafte Weiterbildungen der Gegenstände der unabhängigen Ansprüche sind in den Unteransprüchen gekennzeichnet.

In einem Aspekt ist ein Dokumentenaufnahmegerät offenbart, welches eine Kamera aufweist, wobei die Kamera einen Bildsensor und eine Optik aufweist, wobei die Optik einen einstellbaren Fokus aufweist. Weiterhin weist das Dokumentenaufnahmegerät ein Beleuchtungsmittel auf, das zum Beleuchten mit zumindest zwei unterschiedlichen Wellenlängenbereichen konfiguriert ist. Ferner weist das Dokumentenaufnahmegerät eine Dokumentenhalterung und eine elektronische Steuerung auf, wobei die elektronische Steuerung so konfiguriert ist, dass sie die Optik der Kamera und das Beleuchtungsmittel zumindest für eine erste optische Aufnahme mit Beleuchtung in einem ersten Wellenlängenbereich und einem ersten Fokus und für eine zweite optische Aufnahme mit Beleuchtung in einem zweiten Wellenlängenbereich und einem zweiten Fokus ansteuern kann.

Der Bildsensor könnte insbesondere durch einen Farbsensor realisiert sein, da bestimmte Echtheitsmerkmale farbig sind und entsprechend nur mit einem Farbsensor erfasst werden können. Die Optik könnte durch eine einzelne Linse oder ein Linsensystem, insbesondere durch ein Objektiv realisiert sein. Die Optik könnte bspw. durch ein Objektiv mit einstellbarem Fokus realisiert sein, dessen Fokuseinstellung mit einem Fokusaktor verändert werden kann. Denkbar wäre es ebenso, die Position der Optik relativ zum Bildsensor zu verschieben, mehrere Optiken mit unterschiedlichen Fokuseinstellungen vorzusehen, die gewechselt werden können, bspw. mittels einer Revolveroptik analog einem Tischmikroskop, oder auch verschiedene transparente Materialien in den Strahlengang einzuschwenken, um die Optik mit einstellbarem Fokus zu realisieren. Ebenso denkbar ist, dass die Optik durch eine einzelne Linse realisiert ist, deren Abstand zum Bildsensor verändert wird, um den Fokus einzustellen. Beispielsweise könnte eine solche Linse als sog. "asphärische Linse" ausgebildet sein. Ebenso denkbar für die Realisierung der Optik sind Spiegeloptiken, die Verwendung diffraktiver optischer Elemente oder die Verwendung von Metamaterialen. Das Beleuchtungsmittel könnte bspw. durch LEDs als Lichtquelle realisiert sein, wobei jeweils einzelne oder Gruppen aus LEDs Licht in einem bestimmten Wellenlängenbereich emittieren können, bspw. IR- oder Weißlicht. Die einzelnen Wellenlängenbereiche könnten sich hierbei auch überschneiden. Die elektronische Steuerung könnte beispielsweise durch eine Recheneinheit in Form eines Computers realisiert sein, auf dem eine Aufnahme- und Steuerungssoftware ausgeführt wird. Der Computer könnte dabei in das Gehäuse des Dokumentenaufnahmegeräts integriert oder durch einen externen Computer realisiert sein, der mit den anderen Komponenten des Dokumentenaufnahmegeräts gekoppelt ist. Unter Weißlicht wird eine Mischung verschiedener Wellenlängen verstanden, die insgesamt für das menschliche Auge weiß erscheint, insbesondere eine Mischung, welche Wellenlängen des gesamten sichtbaren Farbspektrums umfasst.

Ausführungsformen der Erfindung könnten den Vorteil haben, dass von einem Dokument, welches sich in/auf der Dokumentenhalterung, bspw. einem Auflageglas, befindet, zwei Aufnahmen bei unterschiedlichen Beleuchtungen und jeweils auf die Beleuchtung abgestimmter Fokuseinstellung gemacht werden können. So könnten beide Aufnahmen mit besonders hoher Abbildungsschärfe erstellt werden. Zu diesem Zweck könnte die elektronische Steuerung das Beleuchtungsmittel und die Kamera, insbesondere deren Optik, ansteuern. Die elektronische Steuerung stellt bspw. für eine optische Aufnahme unter IR-Licht die Optik der Kamera auf den für IR-Licht idealen Fokuswert ein und veranlasst das Beleuchtungsmittel das Dokument mit IR-Licht zu beleuchten. Während der IR-Beleuchtung veranlasst die elektronische Steuerung schließlich die Kamera, eine optische Aufnahme auszulösen. Diese optische Aufnahme könnte die im IR-Bereich optisch erfassbaren Echtheitsmerkmale besonders scharf abbilden.

Analog könnte für eine optische Aufnahme unter Weißlicht verfahren werden, wobei die Optik der Kamera auf den für Weißlicht idealen Fokuswert eingestellt und das Dokument mit Weißlicht beleuchtet werden würde. Diese optische Aufnahme könnte entsprechend die mittels Anregung im sichtbaren Bereich optisch erfassbaren Echtheitsmerkmale besonders scharf abbilden. Durch die elektronische Steuerung könnten beide Aufnahmen nach dem Platzieren des Dokuments in der Dokumentenhalterung in einem automatisierten Prozess nacheinander erstellt werden, ohne dass ein Eingreifen des Nutzers erforderlich wäre. Die Aufnahmen könnten bspw. auch miteinander kombiniert werden, um eine einzelne optische Aufnahme zu erhalten, die sowohl die IR- als auch die weißlichtspezifischen optischen Merkmale besonders scharf abbildet.

Es ist ebenso denkbar, auch eine Beleuchtung in einem dritten Wellenlängenbereich, z.B. im UV-Bereich zu realisieren. Bestimmte Echtheitsmerkmale absorbieren elektromagnetische Strahlung auch in diesem Bereich, wobei sie üblicherweise Licht im sichtbaren Spektrum emittieren, welches wiederum von dem Bildsensor der Kamera erfasst werden könnte.

Gemäß einem Beispiel weist das Dokumentenaufnahmegerät einen Spiegel auf, wobei der Spiegel so konfiguriert ist, dass er das von dem Dokument ausgehende Licht auf die Optik reflektiert. Auf diese Weise müsste die Kamera nicht auf einer optischen Achse oder in direkter Sichtlinie mit der Dokumentenhalterung angeordnet werden. Dies könnte den Vorteil haben, den für das Dokumentenaufnahmegerät notwendigen Bauraum zu reduzieren und so eine kompakte Bauweise zu ermöglichen.

Gemäß einem weiteren Beispiel ist der Bildsensor ein Farbsensor mit einer Bildauflösung ≥ 5 Megapixel, insbesondere ≥ 12 Megapixel. Dies könnte den Vorteil haben, dass die Aufnahmen in Verbindung mit der hohen Abbildungsschärfe einen besonders hohen Detailgrad aufweisen.

Gemäß einem weiteren Beispiel erstreckt sich der erste Wellenlängenbereich von 380 nm bis 800 nm und der zweite Wellenlängenbereich von 780 nm bis 1000 nm. Dies könnte den Vorteil haben, dass eine hohe Anzahl verschiedener Echtheitsmerkmale, die üblicherweise im IR-Bereich bzw. im sichtbaren Spektrum elektromagnetische Strahlung absorbieren, durch die verschiedenen Beleuchtungen besonders gut sichtbar gemacht werden können.

Gemäß einem weiteren Beispiel ist die Dokumentenhalterung ein Auflageglas, wobei das Auflageglas Fokussierhilfen aufweist, die insbesondere in Form von Markierungen am Rand der Fläche des Auflageglases angebracht sind, die sich gegenüber der Fläche befindet, auf welche das Dokument gelegt wird. Solche Fokussierhilfen könnten beispielsweise in Form von aufgedruckten weißen Kreuzen realisiert sein, die um die für das Dokument vorgesehene Auflagefläche angeordnet sind und aufgrund deren Form und ihres Kontrastes die Schärfe der Aufnahme besonders gut beurteilt werden kann. Dies könnte den Vorteil haben, dass ein Einstellen bzw. die Kontrolle des Fokus besonders einfach und zuverlässig möglich ist und entsprechend auch leichter automatisiert werden kann. Da sich die Fokussierhilfen auf der dem Dokument abgewandten Seite befinden, könnte zudem die Gefahr einer Verschmutzung oder Beschädigung der Fokussierhilfen vermindert werden.

Weiterhin könnte durch dieses Beispiel die Bedienbarkeit des Dokumentenaufnahmegeräts erleichtert werden, da ein Dokument in einfacher Weise auf das Auflageglas gelegt werden könnte. Auf diese Weise könnte auch die optische Erfassung verschieden großer bzw. dicker Dokumente erleichtert werden, da die Höhe des Dokuments nur in geringem Maße beschränkt ist und auch Dokumente mit verschieden großem Auflagemaß einfach erfasst werden könnten. Sind die Fokussierhilfen am Rand der Fläche des Auflageglases angebracht, die sich gegenüber der Fläche befindet, auf welche das Dokument gelegt wird, wird beim Kontrollieren und Einstellen des Fokus bspw. berücksichtigt, dass der Abstand (Bildweite) zwischen Fokussierhilfe und Sensorebene etwas geringer ist als zwischen Dokument und Sensorebene. Die Differenz der Bildweiten (Versatz) ist die (optische) Dicke des Auflageglases. Die Dokumenten-Bildweite ist also etwas größer als die Bildweite der Fokussierhilfe. Dieser Versatz könnte bspw. einmalig durch das Dokumentenaufnahmegerät ermittelt und als Parameter in einem Speicher der elektronischen Steuerung hinterlegt werden.

Gemäß einem weiteren Beispiel weist das Dokumentenaufnahmegerät einen Temperatursensor auf, wobei die elektronische Steuerung den Fokus in Abhängigkeit einer vom Temperatursensor gemessenen Temperatur wählt. Die elektronische Steuerung weist in diesem Beispiel ferner einen Speicher auf, wobei der Speicher Steuerungsparameter für die Steuerung der Kamera, insbesondere Fokuswerte für Aufnahmen unter Beleuchtung in unterschiedlichen Wellenlängenbereichen und bei unterschiedlichen Temperaturen, beinhaltet. Aufgrund thermischer Ausdehnung , bspw. des Objektivtubus, verändert sich die Bildweite, also der Abstand zwischen Optik und Bildsensor. Dieses, auch als Temperaturdrift bezeichnete, Phänomen macht den idealen Fokuswert temperaturabhängig, was insbesondere auf den IR-Bereich zutrifft, da der Temperaturkoeffizient des Brechungsindex (dn/dT) vieler IR-Materialien Größenordnungen höher als der von Gläsern im sichtbaren Spektrum ist. Beispielsweise bei Grenzübergängen, die häufig verstärkt den Witterungsbedingungen ausgesetzt sind oder auch im mobilen Einsatz könnten solche Temperaturschwankungen/- unterschiede beim Nutzen eines Dokumentenaufnahmegeräts auftreten und eine im Vergleich zu Aufnahmen bei Raumtemperatur verminderte Abbildungsschärfe bedingen.

Wählt die elektronische Steuerung bspw. den Fokus in Abhängigkeit einer vom Temperatursensor gemessenen Temperatur, könnte der Temperaturdrift kompensiert werden. Dehnen sich Bauteile der Optik bspw. bei besonders hohen Temperaturen aus und die Bildweite nimmt zu, verschiebt sich der Fokus vor die Bildebene des Bildsensors. In diesem Fall könnte der Fokuswert so angepasst werden, dass der Fokus erneut im Bildsensor liegt. Auf diese Weise könnte das Dokumentenaufnahmegerät in einem breiten Temperaturbereich verwendet werden. Der Temperatursensor könnte bspw. an der Optik oder in deren unmittelbarer Nähe angebracht sein. Es ist ebenso denkbar, dass der Temperatursensor im Bildsensor integriert oder Teil der Optik ist. Beispielweise könnte der Temperatursensor an einem Objektivtubus befestigt sein.

Durch einen Speicher, in dem Steuerungsparameter für die Steuerung der Kamera, insbesondere Fokuswerte für Aufnahmen unter Beleuchtung in unterschiedlichen Wellenlängenbereichen und bei unterschiedlichen Temperaturen bspw. in Form einer Lookuptabelle hinterlegt sind, könnte der Temperaturdrift besonders effizient kompensiert werden, da keine Testaufnahmen und Kalibrierungen für unterschiedliche Temperaturen notwendig sind und das Dokumentenaufnahmegerät die Fokuswerte für verschiedene Beleuchtungen bei gegebener Temperatur direkt aus dem Speicher auslesen könnte. Neben den Fokuswerten könnte der Speicher bspw. auch Parameter wie Belichtungszeit, Blendenöffnung oder analoge und digitale Verstärkung beinhalten.

In einem weiteren Aspekt ist ein Dokumentenprüfsystem offenbart, das ein erfindungsgemäßes Dokumentenaufnahmegerät und eine elektronische Auswertungsvorrichtung aufweist, wobei die elektronische Auswertungsvorrichtung so konfiguriert ist, dass sie die optischen Aufnahmen des Dokumentenaufnahmegeräts empfangen und auswerten kann. Die Auswertung könnte z.B. in der Erkennung von Schriftzeichen bestehen, bspw. durch Optical Character Recognition (OCR), z.B. mit Hilfe von maschinellem Lernen oder Mustererkennungsalgorithmen. Dies könnte den Vorteil haben, dass durch eine solche Auswertung bspw. das Auslesen und Speichern der optisch erfassbaren Informationen des Dokuments oder auch eine (teil)automatisierte Überprüfung der Echtheitsmerkmale und damit der Echtheit des Dokuments ermöglicht wird. Die elektronische Auswertungsvorrichtung könnte hierfür bspw. durch eine Recheneinheit in Form eines integrierten Mini-Computers oder eines externen Computer/Laptop realisiert sein, mit welchem das Dokumentenaufnahmegerät gekoppelt ist. Im ersten Fall könnten das Dokumentenaufnahmegerät und die elektronische Auswertungsvorrichtung eine bauliche Einheit bilden, um einen mobilen Einsatz, bspw. in Fahrzeugen, zu ermöglichen. Hierzu ist es denkbar, dass Dokumentenprüfsystem mit einer autarken Energieversorgung, bspw. einer Batterie oder einem Akku, auszurüsten. Im zweiten Fall könnte das Dokumentenprüfsystem besonders einfach in bestehende Infrastruktur, bspw. an Grenzübergängen, integriert werden, da üblicherweise Computer bspw. in Form von Desktop-PCs oder Notebooks in einem solchen Szenario häufig bereits zur Verfügung stehen und mit einem Dokumentenaufnahmegerät gekoppelt werden könnten. Auf dem entsprechenden Computer könnte eine Auswertungssoftware ausgeführt werden, welche die Aufnahmen empfängt und auswertet. In einem solchen Szenario könnte auf demselben Computer bspw. auch eine Aufnahme- und Steuersoftware ausgeführt werden, welche die elektronische Steuerung des Dokumentenaufnahmegeräts realisiert.

Gemäß einem Beispiel hierzu ist die elektronische Auswertungsvorrichtung so konfiguriert, dass sie anhand der ausgewerteten Aufnahmen eine Prüfung der Echtheit des Dokuments durchführen kann. Hierfür könnte bspw. auf der elektronischen Auswertungsvorrichtung eine Auswertungs- und Prüfsoftware ausgeführt werden, welche verschiedene zur Feststellung der Echtheit notwendige Kriterien der Echtheitsmerkmale überprüft, indem bspw. die optisch erfassten Kriterien mit den in einer Datenbank der Software hinterlegten Kriterien abgeglichen werden, um so die Echtheit des Dokuments prüfen zu können. Solche Echtheitsmerkmal könnten bspw. Guillochen sein, also in verschiedenen Farben übereinander gedruckte Wellen- und Schleifenmuster. Das Dokumentenprüfsystem könnte bspw. ein Display aufweisen, über welches das Ergebnis der Dokumentenprüfung dem Nutzer angezeigt werden könnte. Es ist ebenso denkbar, dass das Dokumentenprüfsystem das Ergebnis der Prüfung beispielsweise an einen Computer überträgt, der mit dem Dokumentenprüfsystem gekoppelt ist und dieser wiederum bspw. mittels eines Displays das Ergebnis dem Nutzer zur Verfügung stellt. Ebenso denkbar wäre es, das Dokumentprüfgerät bspw. mit LEDS, Symbolleuchten oder Ähnlichem auszurüsten, damit das Ergebnis der Prüfung in einfacher Weise dem Nutzer angezeigt werden kann. Alternativ oder zusätzlich ist auch eine akustische Ausgabe des Prüfungsergebnisses denkbar, die bspw. insbesondere bei einem negativen Ergebnis, d.h. die Echtheit des Dokuments konnte nicht verifiziert werden, eine schnelle Rückmeldung für den Nutzer ermöglichen könnte. Dies könnte den Vorteil haben, dass die Echtheit eines Dokuments zuverlässig und einfach überprüft werden kann.

Gemäß einem weiteren Beispiel weist das Dokumentenprüfsystem ein RFID-Lesegerät auf, wobei das RFID-Lesegerät so konfiguriert ist, dass es elektronisch in dem Dokument gespeicherte Daten auslesen kann, insbesondere dadurch, dass ein Lesezugriff auf die elektronisch in dem Dokument gespeicherten Daten durch eine Auswertung der optischen Aufnahmen durch die elektronische Auswertungsvorrichtung erlangt wird, insbesondere ist der Lesezugriff durch ein Basic Access Control (BAC)-Protokoll und/oder ein Extended Access Control (EAC)-Protokoll beschränkt, und wobei eine Prüfung der ausgelesenen elektronisch in dem Dokument gespeicherten Daten durch die elektronische Auswertungsvorrichtung erfolgen kann. Das RFID-Lesegerät könnte beispielsweise entweder nach dem RFID-Standard, dem NFC-Standard oder beiden Standards arbeiten. Dies könnte den Vorteil haben, dass der Zugriff auf elektronisch in dem Dokument gespeicherte Daten ermöglicht, deren Auswertung vereinfacht und so die Zuverlässigkeit der Echtheitsprüfung erhöht wird.

Beispielsweise könnten die im Speicher eines Ausweisdokuments, z.B. einem elektronischen Reisepass, hinterlegten persönlichen Daten mit Einträgen in einer Datenbank abgeglichen werden, auf welche das Dokumentenprüfsystem Zugriff hat, um so deren Echtheit zu überprüfen. Insbesondere in modernen Ausweisdokumenten, sind üblicherweise Sicherheitsprotokolle implementiert, welche den unbefugten Zugriff auf die im Chip des Ausweisdokuments gespeicherten persönlichen Daten verhindern sollen. Beispielsweise ist ein Basic Access Control (BAC)-Protokoll implementiert, welches die Kommunikation zwischen dem Chip im Dokument und dem Lesegerät schützt, indem es sicherstellt, dass nur berechtigte Lesegeräte, die physikalischen Zugriff auf das Dokument haben und bestimmte geschützte Informationen auslesen können (wie Passnummer, Geburtsdatum und Ablaufdatum), die Möglichkeit erhalten, die gespeicherten Daten auszulesen. Dies kann bspw. dadurch realisiert sein, dass das Dokumentenprüfsystem zunächst die sog. Machine Readable Zone (MRZ) oder die sog. Card Access Number (CAN) des Ausweisdokuments ausliest und mit Hilfe der hierdurch erhaltenen Informationen bzw. der Zugangsschlüssel Lesezugriff auf den Speicher des Ausweisdokuments erlangen kann. Ein weiteres Beispiel für ein solches Sicherheitsprotokoll, das den Lesezugriff auf den Speicher eines Ausweisdokuments regelt, ist das Extended Access Control (EAC)-Protokoll, das dem BAC-Protokoll weitere Sicherheitsebenen für besonders sensible Daten wie Fingerabdrücke und Gesichtsbilder hinzufügt.

Beispielsweise könnte es für den Lesezugriff auch nötig sein, beide Seiten des Dokuments optisch zu erfassen. Für einen solchen Fall könnte der Nutzer mit dem Dokumentenprüfsystem zunächst eine Seite des Dokuments aufnehmen, das Dokument umdrehen und dann die andere Seite in einem weiteren Erfassungsschritt. Erst wenn sämtliche optischen Echtheitsmerkmale erfasst und überprüft wurden, könnte der Lesezugriff auf den Speicher des Dokuments erlangt werden.

Gemäß einem weiteren Beispiel ist die elektronische Auswertungsvorrichtung so konfiguriert, dass sie anhand der ausgewerteten optischen Aufnahmen und der ausgelesenen elektronisch in dem Dokument gespeicherten Daten eine Prüfung der Echtheit des Dokuments durchführen kann. Zum Beispiel könnten folgende Verfahren für die Prüfung angewendet werden:
- Passive Authentication (PA), die die Echtheit der im Chip abgelegten Daten verifiziert, um zu bestätigen, dass diese seit ihrer Erstellung unverändert geblieben sind;
- Active Authentication (AA), die das Kopieren oder Klonen des Chips unterbindet, indem dieser seine Identität mittels eines digitalen Schlüssels beweisen muss.

Im Rahmen der Passive Authentication (PA) und Active Authentication (AA) könnte die elektronische Auswertungsvorrichtung zum Beispiel die digitalen Signaturen der im Dokument enthaltenen Daten untersuchen, um zu überprüfen, ob diese Signaturen gültig und von einer glaubwürdigen Quelle ausgestellt wurden oder ob die zur Identifikation des Chips verwendeten digitalen Schlüssel den erwarteten Schlüsseln entsprechen, wodurch sichergestellt werden könnte, dass keine unberechtigten Kopien oder Veränderungen am Chip vorgenommen wurden.

Ebenso könnten bspw. die im Speicher des Dokuments hinterlegten Informationen mit den auf dem Dokument optisch lesbaren Informationen oder mit einer Datenbank, bspw. die einer Behörde, welche Grenzübertritte regelt, abgeglichen werden. Bei einem Grenzübertritt könnte so bspw. das im Speicher des Ausweisdokuments hinterlegte Foto der sich ausweisenden Person mit dem auf dem Ausweisdokument gedruckten Foto verglichen werden. Dies könnte den Vorteil haben, dass die Zuverlässigkeit der Echtheitsprüfung des Dokuments erhöht wird, da diese nicht allein auf optischen Kriterien basiert, sondern auch auf den im Speicher des Dokuments hinterlegten elektronisch in dem Dokument gespeicherten Daten. Eine Dokumentenfälschung könnte so zusätzlich erschwert werden, da sowohl Manipulationen an den optisch erfassbaren Echtheitsmerkmalen als auch Manipulationen an den elektronisch in dem Dokument gespeicherten Daten erfasst werden könnten.

Es ist ebenso denkbar, die Intensität der Prüfung, bspw. in der Auswertungs- und Prüfsoftware, einstellbar zu machen. So könnte beispielsweise in einem grundlegenden Szenario lediglich geprüft werden, ob das Erscheinungsbild der Person, die sich ausweist, mit dem auf dem Ausweis gedruckten und im Ausweischip gespeicherten Foto übereinstimmt, ohne dass der Prüfende Zugang zu besonders sensiblen und schützenswerte Daten wie Fingerabdrücken erhält. Ein Anwendungsbeispiel hierfür wäre eine Grenzkontrolle, bei der ein Erstprüfer eine Basisprüfung der Echtheit eines hoheitlichen Ausweisdokuments wie einem Reisepass durchführt, indem er mit Hilfe des Dokumentenprüfsystems überprüft, ob das visuell erkennbare Passbild mit dem der ausweisenden Person übereinstimmt. Der Erstprüfer führt dies für jede Person durch, welche die Grenze übertreten möchte. Ein zweiter Prüfer könnte dann die hoheitlichen Ausweisdokumente bestimmter Personen einer detaillierteren Prüfung unterziehen und dabei auch auf andere elektronische Daten wie gespeicherte Fingerabdrücke zugreifen, um diese mit der Person abzugleichen oder die elektronisch in dem Dokument gespeicherten Daten insgesamt auf Manipulation hin zu prüfen.

In einem weiteren Aspekt ist ein Verfahren zum optischen Aufnehmen eines Dokuments offenbart, welches das zur Verfügung stellen eines erfindungsgemäßen Dokumentenaufnahmegeräts umfasst. Das Verfahren umfasst weiterhin das Positionieren des Dokuments in der bzw. auf der Dokumentenhalterung, das Einstellen der Optik auf einen ersten Fokus, das Beleuchten des Dokuments in einem ersten Wellenlängenbereich, das Auslösen einer ersten optischen Aufnahme, das Einstellen der Optik auf einen zweiten Fokus, das Beleuchten des Dokuments in einem zweiten Wellenlängenbereich und das Auslösen einer zweiten optischen Aufnahme. Auf diese Weise könnten von einem Dokument, welches sich in/auf der Dokumentenhalterung befindet, zwei optische Aufnahmen bei unterschiedlichen Beleuchtungen und jeweils auf die Beleuchtung abgestimmter Fokuseinstellung gemacht werden. Hierdurch könnten beide Aufnahmen mit besonders hoher Abbildungsschärfe erstellt werden. Es ist ebenso denkbar, dass noch weitere Aufnahmen des Dokuments bei weiteren Beleuchtungen gemacht werden, die sich von den ersten beiden Beleuchtungen unterscheiden. Eine dritte optische Aufnahme mit Beleuchtung im UV-Bereich, bei welcher die Optik auf einen dritten Wert eingestellt wird, wäre hierfür ein Beispiel. Durch eine solche dritte Aufnahme könnten bspw. Echtheitsmerkmale, die durch Absorption von elektromagnetischer im UV-Bereich angeregt werden und Licht im sichtbaren Spektrum emittieren visuell erfasst werden.

Gemäß einem Beispiel hierzu wird in einem Verfahren ein erfindungsgemäßes Dokumentenaufnahmegerät mit einem Temperatursensor zur Verfügung gestellt, wobei die elektronische Steuerung des Dokumentenaufnahmegeräts einen Speicher aufweist, wobei der Speicher Steuerungsparameter für die Steuerung der Kamera, insbesondere Fokuswerte für Aufnahmen unter Beleuchtung mit unterschiedlichen Wellenlängenbereichen und bei unterschiedlichen Temperaturen beinhaltet. Weiterhin wird in dem Verfahren der Fokus jeweils in Abhängigkeit der vom Temperatursensor gemessenen Temperatur gewählt. Dies könnte den Vorteil haben, dass der der Temperaturdrift kompensiert und so die Abbildungsschärfe erhöht wird.

Gemäß einem weiteren Beispiel hierzu wird in einem Verfahren ein erfindungsgemäßes Dokumentenprüfsystem mit einem Auflageglas als Dokumentenhalterung und einem Temperatursensor zur Verfügung gestellt, wobei das Auflageglas Fokussierhilfen in Form von Markierungen aufweist, die insbesondere am Rand der Fläche des Auflageglases angebracht sind, die sich gegenüber der Fläche befindet, auf welche das Dokument gelegt wird. Zudem umfasst dieses Beispiel das Auslesen des Temperatursensors und Speichern des Temperaturwerts, das Auswerten der Aufnahmen und Ermitteln desjenigen Fokuswerts, bei dem die Fokussierhilfen mit der höchsten Abbildungsschärfe aufgenommen worden sind. Weiterhin umfasst dieses Beispiel das Berechnen desjenigen Fokuswerts, bei dem unter Berücksichtigung des Abstandes der Fokussierhilfen zu einem in/auf der Dokumentenhalterung positionierten Dokument das Dokument mit der höchsten Abbildungsschärfe aufgenommen wird, das Vergleichen des berechneten Fokuswerts mit dem für die entsprechende Kombination aus Temperatur und Wellenlängenbereich der Beleuchtung hinterlegten Fokuswerts und das Ersetzen des für den ersten und/oder den zweiten Fokus hinterlegten Fokuswerts, falls der berechnete Fokuswert außerhalb einer vorgegebenen Toleranzschwelle liegt.

Auf diese Weise könnte eine Automatisierung der Kontrolle bzw. der Einstellung des Fokus auf zuverlässige und automatisierte Weise realisiert werden. Mit anderen Worten könnte so der Fokus vor der eigentlichen Aufnahme jeweils für unterschiedliche Beleuchtungen bei unterschiedlichen Temperaturen kontrolliert und kalibriert werden. Dies könnte bspw. erfolgen, indem eine Reihe von Aufnahmen um einen für diese Art von Beleuchtung zuvor ermittelten optimalen Fokuswert herum gemacht werden, wobei gleichzeitig die Temperatur des Temperatursensors ausgelesen und gespeichert wird.

Die Auswertung der Reihe von optischen Aufnahmen könnte durch die elektronische Auswertungsvorrichtung erfolgen. Diese sucht bspw. mit Hilfe von Bildanalyseverfahren, z.B. unter Zuhilfenahme von maschinellem Lernen die auf den Rand des Auflageglases aufgedruckten Markierungen. Es ist ebenso denkbar, dass die Koordinaten der Fokussierhilfen in den Aufnahmen bereits in dem Dokumentenprüfsystem hinterlegt sind. Die Fokussierhilfen könnten hinsichtlich der Abbildungsschärfe vermessen und der Mittelwert der MTF (Modulation Transfer Function) über alle Markierungen ermittelt werden. Je höher die Abbildungsschärfe, desto höher die MTF. Die Vermessung der Abbildungsschärfe könnte bspw. durch das Aufsuchen eines Punktes mit dem höchsten Kontrast, vergleichbar mit einem Fokuskalibrierungsalgorithmus, der nach dem Hill-Climbing-Prinzip arbeitet, erfolgen. Der neu ermittelte Fokuswert könnte unter Berücksichtigung der Kameratemperatur mit im Dokumentenprüfsystem hinterlegten Werten verglichen werden. Liegen die gemessenen Werte innerhalb einer vorgegebenen Toleranzschwelle, so könnten die im Dokumentenprüfsystem hinterlegten Werte beibehalten werden. Liegen die neu ermittelten Werte außerhalb der Toleranzschwelle, könnten sie mit den neuen Werten aktualisiert werden.

Sind die Fokussierhilfen auf der Fläche des Auflageglases angebracht, die sich gegenüber der Fläche befindet, auf welche das Dokument gelegt wird, könnte bspw. berücksichtigt werden, dass der Abstand (Bildweite) zwischen Fokussierhilfe und Sensorebene etwas geringer ist als zwischen Dokument und Sensorebene. Die Differenz der Bildweiten (Versatz) ist die (optische) Dicke des Auflageglases. Die Dokumenten-Bildweite wäre also etwas größer als die Bildweite der Fokussierhilfe. Dieser Versatz könnte bspw. einmalig für ein Dokumentenprüfsystem ermittelt und als Parameter hinterlegt werden.

Für verschiedene Kombinationen aus Temperatur und Beleuchtung könnte durch den Vergleich der Abbildungsschärfe von Aufnahmen, welche bei unterschiedlichen Fokuseinstellungen aufgenommen wurde, ein genereller idealer Fokuswert automatisiert ermittelt werden. Beispielsweise könnten diese idealen Fokuswerte in einer Lookup-Tabelle (LUT) hinterlegt sein, auf welche die elektronische Steuerung des Dokumentenprüfsystems zugreifen kann, damit nicht für jede Kombination aus Temperatur und Beleuchtung der ideale Fokuswert einzeln ermittelt werden muss.

Ein Dokumentenprüfsystem könnte bspw. kalibriert werden, nachdem es an einen Ort mit einer vom vorherigen Ort deutlich unterschiedlichen Temperatur gebracht wurde oder die Temperatur an dem Ort stark schwankt, bspw. durch Aufheizen von Räumen in typischerweise kalten Regionen. Diese Szenarien sind insbesondere auch für eine mobile Ausgestaltung eines Dokumentenaufnahmegeräts vorstellbar. Auch unabhängig von Temperaturänderungen kann es zu Abweichungen vom idealen Fokus kommen, bspw. durch Materialfehler/-toleranzen. Das beispielhafte Verfahren könnte auch in solchen Szenarien von Vorteil sein, da durch das Kalibrieren solche Fehlerquellen kompensiert werden könnten. Die Durchführung eines solchen beispielhaften Verfahrens könnte insbesondere in den Situationen nützlich sein, wenn die Abbildungsschärfe signifikant nachgelassen hat oder die Prüfungsergebnisse nicht mehr konsistent sind. In diesem Falle könnte bspw. ein solches beispielhaftes Verfahren durch den Nutzer selbst initiiert werden, bspw. auch angeregt durch einen Servicetechniker im Rahmen einer Fehlersuche/-korrektur. Das Dokumentenprüfsystem könnte bspw. auch pro Einsatztag einmal vor der ersten Aufnahme oder stets nach dem Einschalten kalibriert werden, da abgesehen vom Temperaturdrift mit hoher Wahrscheinlichkeit keine Änderungen der idealen Fokuswerte auftreten.

Es ist ebenso denkbar, dass zusätzlich zum Fokus auch andere Steuerungsparameter der Kamera kontrolliert und gegebenenfalls mit neuen Werten aktualisiert werden. Dies könnte bspw. für die Belichtungszeit, die Blendenöffnung oder analoge und digitale Verstärkung der Fall sein. Auch könnte statt der Fokushilfen ein Kalibrierdokument mit dem beispielhaften Verfahren aufgenommen werden, um die Steuerungsparameter zu kontrollieren und gegebenenfalls zu ersetzen. Es ist ebenso denkbar, dass die Fokussierhilfen auf der Seite des Auflageglases angebracht sind, auf welche das Dokument aufgelegt wird. Dies könnte den Vorteil haben, dass die optische Dicke des Auflageglases und sonstige durch das Material des Auflageglases bedingte Veränderungen wie Lichtbrechung nicht berechnet werden müssen, um die Kalibrierung durchführen zu können

Nachdem die Steuerungsparameter kontrolliert und gegebenenfalls aktualisiert wurden, könnten diese für eine erste Aufnahme übernommen werden. Beispielsweise wird durch Verfahren der Optik mit Hilfe eines Fokusaktors, z.B. durch Verfahren der gesamten Optik oder einzelner Linsen bzw. Linsengruppen eines Objektivs, der Fokus auf den für die Aufnahme gewünschten Wert eingestellt. Zudem werden die Werte für Belichtungszeit, Blendenöffnung sowie analoge/digitale Verstärkung an die Kamera übermittelt. Im Anschluss könnte die Aufnahme ausgelöst werden, indem der Bildsensor der Kamera dem vom Dokument ausgehenden Licht ausgesetzt wird. Dieses Aussetzen erfolgt über einen definierten Zeitraum und kann bspw. auf mechanische Weise, z.B. durch Betätigung eines oder mehrerer Verschlussvorhänge, oder durch Ein- und Ausschalten des Sensors bzw. dem Starten und Beenden des Auslesevorgangs realisiert werden.

Im Übrigen lassen sich die auf die Dokumentenaufnahmegeräte bzw. Dokumentenprüfsystem bezogenen Merkmale und Vorteile entsprechend auf die Verfahren übertragen, so dass an dieser Stelle auf weitere Wiederholungen verzichtet werden kann.

In einem weiteren Aspekt ist ein Verfahren zum Prüfen eines Dokuments offenbart, welches das zur Verfügung stellen eines erfindungsgemäßen Dokumentenprüfsystems umfasst. Weiterhin umfasst das Verfahren das Aufnehmen des Dokuments mit einem erfindungsgemäßen Verfahren, das Prüfen der optischen Merkmale des Dokuments und das Ausgeben des Prüfungsergebnisses. Mit einem solchen Verfahren könnte eine (teil)automatisierte Überprüfung der Echtheitsmerkmale eines Dokuments ermöglicht werden. Dies könnte den Vorteil haben, dass die Echtheit eines Dokuments zuverlässig und einfach überprüft werden kann. Die Ausgabe des Prüfungsergebnisses könnte bspw. über eine Display erfolgen, mit dem das Dokumentenprüfsystem ausgerüstet ist oder über LEDs, Symbolleuchten oder Ähnlichem. Alternativ oder zusätzlich ist auch eine akustische Ausgabe des Prüfungsergebnisses denkbar, die bspw. insbesondere bei einem negativen Ergebnis, d.h. die Echtheit des Dokuments konnte nicht verifiziert werden, eine schnelle Rückmeldung für den Nutzer ermöglichen könnte.

Gemäß einem Beispiel hierzu wird in einem Verfahren ein erfindungsgemäßes Dokumentenprüfsystem mit einem RFID-Lesegerät zur Verfügung gestellt, wobei das Dokumentenprüfsystem so konfiguriert ist, dass es die elektronisch in dem Dokument gespeicherten Daten des Dokuments auslesen kann und eine Prüfung der ausgelesenen elektronisch in dem Dokument gespeicherten Daten des Dokuments durch die Auswertungsvorrichtung erfolgen kann. Dies könnte den Vorteil haben, dass die Zuverlässigkeit der Echtheitsprüfung des Dokuments erhöht wird, da diese nicht allein auf optischen Kriterien basiert, sondern auch auf den in einem Speicher des Dokuments hinterlegten elektronisch in dem Dokument gespeicherten Daten.

Im Übrigen lassen sich die auf die Dokumentenprüfsysteme bezogenen Merkmale und Vorteile entsprechend auf die Verfahren zum Prüfen eines Dokuments übertragen, so dass an dieser Stelle auf weitere Wiederholungen verzichtet werden kann.

Es versteht sich, dass mehrere der vorgenannten Beispiele miteinander kombiniert werden können, solange sich die Beispiele nicht gegenseitig ausschließen.

### KURZE BESCHREIBUNG DER ZEICHNUNGEN

Im Folgenden werden Beispiele anhand der Zeichnungen näher erläutert. Es zeigen:
- Figur 1: eine schematische perspektivische Schnittdarstellung eines exemplarischen Dokumentenaufnahmegeräts,
- Figur 2: eine schematische Darstellung eines weiteren Beispiels eines Dokumentenaufnahmegeräts,
- Figur 3: eine schematische Darstellung eines exemplarischen Dokumentenprüfsystems, welches das Dokumentenaufnahmegerät aus Figur 1 umfasst,
- Figur 4: eine schematische Darstellung einer Dokumentenhalterung des Dokumentenprüfsystem aus Figur 2,
- Figur 5: ein Flussdiagramm eines exemplarischen Verfahrens zum optischen Aufnehmen eines Dokuments,
- Figur 6: ein Flussdiagramm eines exemplarischen Verfahrens zum Prüfen eines Dokuments.

### DETAILLIERTE BESCHREIBUNG

Im Folgenden werden einander ähnliche Elemente mit den gleichen Bezugszeichen gekennzeichnet.

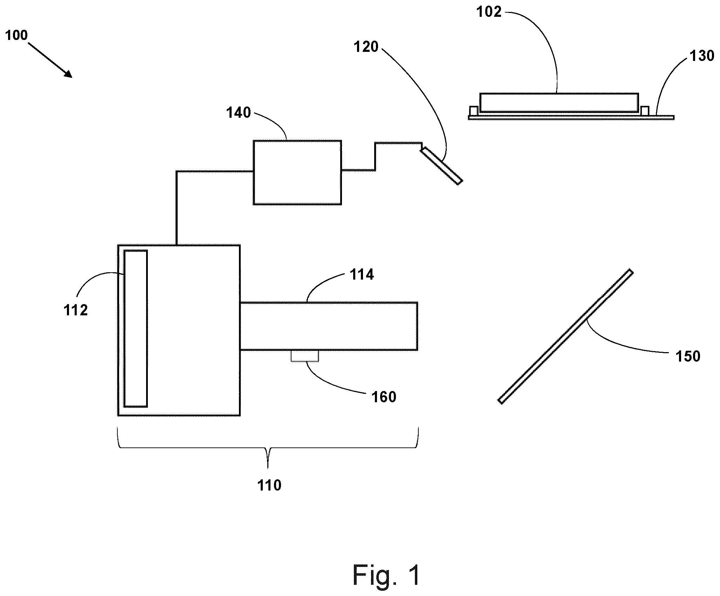

Figur 1 zeigt ein exemplarisches Dokumentenaufnahmegerät in einer perspektivischen Schnittdarstellung. Das Dokumentenaufnahmegerät dient dazu, ein Dokument 102 mittels einer Kamera 110 visuell zu erfassen, wobei der Fokus der Optik 114, welche die Kamera 110 aufweist für einzelne Aufnahmen einstellbar ist. Im Folgenden ist ohne Beschränkung der Allgemeinheit davon auszugehen, dass das Dokument 102 eine hoheitliches Identitätsdokument ist. Es ist ebenso denkbar, dass z.B. Banknoten, Visa, Führerscheine, Kraftfahrzeugbriefe, Banknoten oder andere Urkunden aufgenommen bzw. auf Echtheit geprüft werden.

Das Dokument 102 wird in diesem Beispiel auf einem transparenten Auflageglas positioniert, dass eine Dokumentenhalterung 130 realisiert. Anstelle eines Auflageglases als Dokumentenhalterung 130 wäre bspw. auch ein Aufnahmegehäuse denkbar, in welches das Dokument 102 gelegt wird.

Unterhalb des Auflageglases befindet sich ein Beleuchtungsmittel 120, was beispielsweise durch verschiedene LEDS oder Gruppen aus LEDS realisiert sein könnte. Beispielsweise weist das Beleuchtungsmittel 120 als Leuchtmittel eine LED für Weißlicht, eine LED für Infrarotlicht und eine LED für UV-Licht auf. Die Beleuchtungsmittel sind weder auf LEDs allgemein noch auf die genannten Wellenlängenbereiche beschränkt. Beispielsweise sind auch Leuchtmittel in Form von Blitzlampen oder Ähnlichem und ebenso Leuchtmittel, die eine Beleuchtung außerhalb der genannten Wellenlängenbereiche ermöglichen, denkbar. Das Beleuchtungsmittel 120 beleuchtet für die optische Aufnahme das auf dem Auflageglas liegende Dokument. Dabei kann das Beleuchtungsmittel 120 bspw. durch Auswahl spezifischer LEDs den Wellenlängenbereich, mit dem das Dokument 102 beleuchtet wird, verändern und für einzelne Aufnahmen anpassen. Alternativ ist es bspw. möglich, eine einzelne Lichtquelle von Weißlicht in Kombination mit einem Polychromator zu nutzen, um Beleuchtungen mit verschiedenen Wellenlängenbereichen zu realisieren.

Unterhalb des Auflageglases ist zudem ein Spiegel 150 angeordnet. Dieser ist so positioniert, dass das von dem Dokument 102 ausgehende Licht auf den Spiegel 150 trifft und durch diesen auf die Optik 114 der Kamera 110 reflektiert wird. Der Abstand zwischen Spiegel 150 und Kamera 110 ist in der Regel fest. Ein einstellbarer Abstand und eine manuelle oder durch die Steuerungssoftware veranlasste Veränderung des Abstands, bspw. zur (Fein-)Justierung für bestimmte Wellenlängenbereiche ist ebenso denkbar. Es ist ebenso denkbar ein Dokumentenaufnahmegerät ohne Spiegel zu realisieren, in welchem die Kamera so angebracht ist, dass das von dem Dokument in einer Dokumentenhalterung ausgehende Licht auf die Optik der Kamera trifft. In Bezug auf Figur 1 könnte dies bspw. realisiert sein, indem die Kamera unterhalb des Auflageglases positioniert ist und die Optik in Richtung des Dokuments weist.

Das Licht trifft durch die Optik 114 auf den Bildsensor 112, welcher das Licht in digitale Signale umwandelt, aus denen bspw. mit Hilfe eines Prozessors ein digitales Bild erstellt wird. Der Bildsensor 112 könnte beispielsweise ein CMOS-Sensor sein, der eine Bildauflösung ≥ 12 Megapixeln hat. Ebenso denkbar sind andere Typen von Bildsensoren wie beispielsweise CCD-Sensoren bzw. Bildsensoren mit anderen Bildauflösungen. Die Belichtungszeit kann beispielsweise mechanisch durch die Betätigung eines oder mehrerer Verschlussvorhänge oder durch das Ein- und Ausschalten des Sensors bzw. das Starten und Beenden des Auslesevorgangs gesteuert werden. Die Optik 114 im Beispiel von Figur 1 ist durch ein Objektiv mit zwei Linsen realisiert und weist einen Fokusaktor auf, mit dessen Hilfe der Fokus eingestellt werden kann. Ein solcher Fokusaktor kann beispielsweise mithilfe eines den piezoelektrischen Effekt ausnutzen Aufbaus realisiert sein. Dazu werden piezoelektrische Elemente verwendet, die sich bei Anlegen einer elektrischen Spannung ausdehnen oder zusammenziehen. Diese präzise Steuerung der Bewegung ermöglicht es bspw., die Position des gesamten Objektivs relativ zum Bildsensor 112 bspw., um mehrere 10 oder mehrere 100 Mikrometer zu verändern, um den gewünschten Fokuspunkt einzustellen. Auf diese Weise kann durch den Fokusaktor das Objektiv auf einer Achse zwischen dem Spiegel 150 und dem Bildsensor 112 verfahren und so der Fokus für jede Aufnahme gezielt eingestellt werden.

Auf der Oberseite der Kamera 110 ist zudem ein Temperatursensor 150 angebracht. Dieser dient dazu, die Temperatur für die Kompensierung des sogenannten Temperaturdrifts zu ermitteln und an die elektronische Steuerung 140 zu übertragen. Der Fokus könnte durch die elektronische Steuerung 140 in Abhängigkeit der von dem Temperatursensor 150 ermitteln Temperatur eingestellt werden, um bspw. durch thermische Ausdehnung von Bauteilen verursachte Veränderungen des idealen Fokuspunktes zu kompensieren.

Unterhalb des Spiegels 150 ist die elektronische Steuerung 140 angeordnet, welche das Beleuchtungsmittel 120 und die Kamera 110 ansteuert, beispielsweise durch Verfahren des Fokusaktors und Übertragen der Beleuchtungsparameter bzw. entsprechender Befehle an die Kamera, um bspw. Belichtungszeit, Blendenöffnung oder manuelle beziehungsweise digitale Verstärkung zu steuern. Die elektronische Steuerung 140 ist in diesem Beispiel eine Recheneinheit in Form eines Minicomputers, auf dem eine Aufnahme- und Steuerungssoftware ausgeführt wird. Die Position der elektronischen Steuerung ist hierbei in keiner Weise auf die in Figur 1 gezeigte Position beschränkt, vielmehr könnte die elektronische Steuerung 140 auch an unterschiedlichen Stellen innerhalb des Gehäuses das Dokumentenaufnahmegeräts positioniert sein. Ebenso könnte die elektronische Steuerung 140 durch eine Recheneinheit außerhalb des hier gezeigten Gehäuses realisiert sein, beispielsweise in Form eines PCs oder eines Notebooks, auf dem eine entsprechende Aufnahme- und Steuerungssoftware ausgeführt wird.

Mit Hilfe eines solchen Dokumentenaufnahmegeräts 100 könnten beispielsweise zwei Aufnahmen eines Dokumentes erstellt werden. Beispielsweise könnte eine erste optische Aufnahme bei einer Beleuchtung mit Weißlicht erstellt werden. Zu diesem Zweck könnte die elektronische Steuerung 140 den Fokus so einstellen, dass für eine Beleuchtung mit Weißlicht eine möglichst hohe Abbildungsschärfe erzielt wird. Zudem könnte die elektronische Steuerung 140 das Beleuchtungsmittel 120 veranlassen, das Dokument 102 mit Weißlicht zu beleuchten und während dieser Beleuchtung die erste optische Aufnahme durch Ansteuern der Kamera 110 auslösen. Nachdem die optische Aufnahme unter Weißlicht erstellt wurde, könnte die elektronische Steuerung 140 den Fokus auf einen für eine Beleuchtung mit Infrarotlicht idealen Fokuswert einstellen. Entsprechend könnte die elektronische Steuerung 140 anschließend das Beleuchtungsmittel 120 veranlassen, das Dokument 102 mit Infrarotlicht zu beleuchten und während dieser Beleuchtung die zweite Aufnahme durch Ansteuern der Kamera 110 auslösen. Die Aufnahmen könnten bspw. einzeln oder als übereinandergelegte Aufnahme dem Nutzer zur Verfügung gestellt werden, bspw. über ein angeschlossenes Display oder eine externe elektronische Steuerung, welche eine Display aufweist. Alternativ oder zusätzlich dazu könnten die einzelnen oder kombinierte Aufnahmen in digitaler Form zur weiteren Verarbeitung, insbesondere zur Prüfung der Echtheit des Dokument, ausgegeben werden. Beispielsweise könnten sie an eine Recheneinheit übertragen werden, die in das Dokumentenaufnahmegerät integriert oder mit dieser gekoppelt ist.

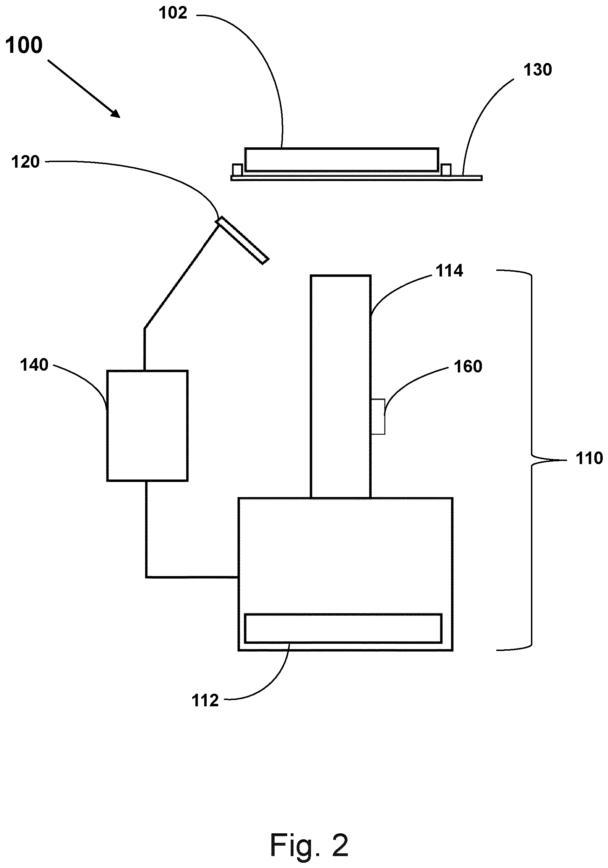

Figur 2 zeigt eine schematische Darstellung eines weiteren Beispiels eines Dokumentenaufnahmegeräts 100. Bei dem Beispiel handelt es sich um die oben beschriebene Variante eines Dokumentenaufnahmegeräts 100 ohne Spiegel. Die Kamera 110 ist in Figur 2 so unterhalb der Dokumentenhalterung 130 positioniert, dass das von dem Dokument 102 in der Dokumentenhalterung 130 ausgehende Licht auf die Optik 114 der Kamera 110 trifft. Analog dem Dokumentenaufnahmegerät aus Figur 1 könnte die elektronische Steuerung 140 das Beleuchtungsmittel 120 veranlassen, das Dokument 102 beispielsweise nacheinander mit Weißlicht bzw. Infrarotlicht zu beleuchten und während der einzelnen Beleuchtungen optische Aufnahmen durch Ansteuern der Kamera 110 auslösen. Der Temperatursensor 160 ist an der Optik 114 der Kamera 110 angebracht, welche wiederum den Bildsensor 112 umfasst.

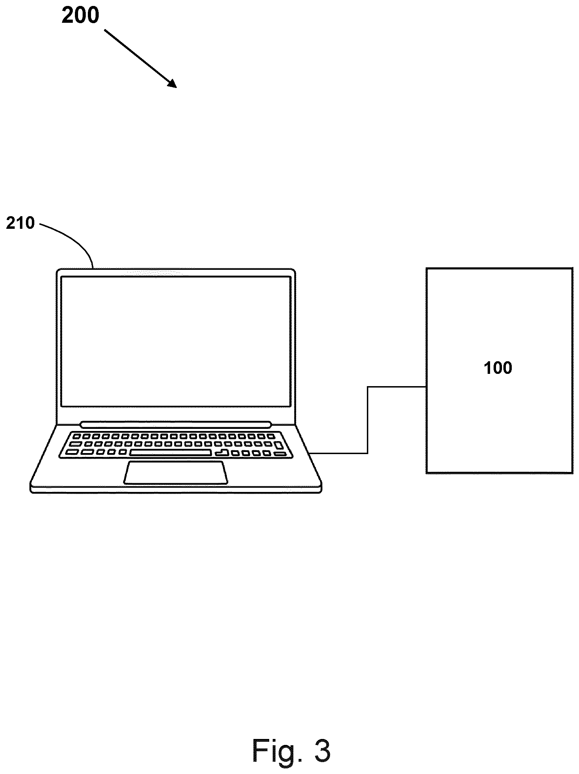

Figur 3 zeigt eine schematische Darstellung eines exemplarischen Dokumentenprüfsystems 200, welches das Dokumentenaufnahmegerät 100 aus Figur 1 umfasst. Das Dokumentenprüfsystem 200 weist eine elektronische Auswertungsverrichtung 210 auf, die im Beispiel von Figur 2 durch ein Notebook realisiert ist. Auf diesem Notebook könnte eine Auswertungs- und Prüfsoftware ausgeführt werden, welche die von dem Dokumentenaufnahmegerät 100 erstellten Aufnahmen empfängt und auswertet. Es ist denkbar, dass die elektronische Auswertungsvorrichtung 210 ebenso die Aufgaben der elektronischen Steuerung des Dokumentenprüfsystems 200 übernimmt, bspw. indem auch entsprechende Aufnahme- und Steuerungssoftware auf der elektronische Auswertungsvorrichtung 210 ausgeführt wird. Für die Auswertung der Aufnahmen könnte die Auswertungs- und Prüfsoftware mittels Bildanalyseverfahren, bspw. unter Einsatz von maschinellem Lernen, verschiedene zur Feststellung der Echtheit notwendige Kriterien auf den Aufnahmen identifizieren. Diese Kriterien könnten bspw. ausgewertet werden, indem sie mit den in einer Datenbank der Software hinterlegten Vergleichskriterien abgeglichen werden, um so die Echtheit des Dokuments prüfen zu können.

Optional könnte das Dokumentenprüfsystem 200 ein RFID-Lesegerät (nicht in Figur 3 gezeigt) aufweisen, mit dem die elektronisch in dem Dokument 102 gespeicherten Daten ausgelesen werden könnten. Auf diese Weise könnte eine Prüfung der ausgelesenen elektronisch in dem Dokument 102 gespeicherten Daten durch die elektronische Auswertungsvorrichtung 210 erfolgen, bspw. indem geprüft wird, ob die elektronisch in dem Dokument 102 gespeicherten Daten mit den auf dem Dokument 102 optisch lesbaren Informationen übereinstimmen. Es könnte ebenfalls die Authentizität der in einem Speicher bzw. Chip des Dokuments 102 hinterlegten Daten selbst verifiziert werden, indem beispielsweise kontrolliert wird, ob diese Daten seit ihrer Erstausstellung unverändert geblieben sind. Darüber hinaus könnte das Kopieren oder Klonen des Chips detektiert werden, indem der Chip seine Identität mittels eines digitalen Schlüssels bestätigen muss.

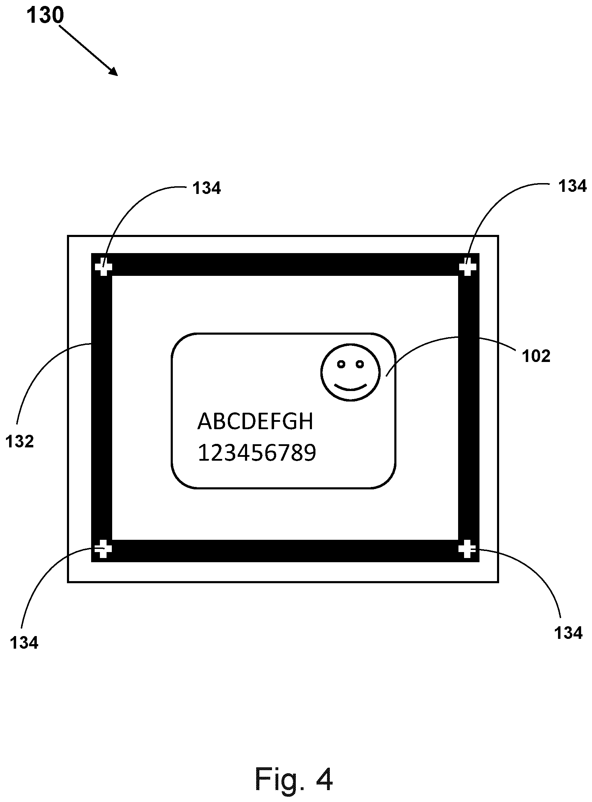

Figur 4 zeigt eine schematische Darstellung einer Dokumentenhalterung 130 des Dokumentenprüfsystems 200 aus Figur 3. Die Dokumentenhalterung 130 ist in Figur 4 in Form eines Auflageglases realisiert, dessen Rand 132 schwarz eingefärbt ist. Auf dem Rand 132 sind Fokussierhilfen 134 in Form von weißen Kreuzen angebracht. Diese werden bspw. durch Aufdrucken auf die Fläche realisiert, welche dem Dokument 102 abgewandt ist. Die Fokussierhilfen 134 könnten ebenso andere Formen annehmen, wie beispielsweise Rauten. Aufgrund des hohen Kontrastes zwischen den weißen Fokussierhilfen 134 und dem schwarz gefärbten Rand 132, wird eine Erfassung der Fokussierhilfen 134 durch Bildanalyseverfahren vereinfacht. Auf diese Weise könnte der Fokus für eine bestimmte Beleuchtung oder Kombinationen aus Temperatur und Beleuchtung kontrolliert bzw. kalibriert werden.

Dies könnte bspw. realisiert werden, indem eine Reihe von Aufnahmen um einen für eine Beleuchtung zuvor ermittelten optimalen Fokuswert herum gemacht werden, wobei gleichzeitig die Temperatur des Temperatursensors 150 ausgelesen und gespeichert wird. Die Fokussierhilfen 134 auf den einzelnen Aufnahmen könnten durch die elektronische Auswertungsvorrichtung 210 erfasst und deren Schärfe, bspw. anhand des Helligkeitsunterschieds zwischen einem Pixel, welcher der Fokussierhilfe 134 zugeordnet ist und einem benachbarten Pixel, der dem schwarzem Rand 132 zugeordnet ist, beurteilt werden. Der Fokuspunkt der Aufnahme mit der höchsten Abbildungsschärfe könnte in einem Speicher des Dokumentenprüfsystem 200 hinterlegt werden, sofern er sich von dem für die Kombination aus Beleuchtungsart und Temperatur bereits hinterlegten Wert unterscheidet. In Figur 3 befinden sich die Fokussierhilfen 134 auf der dem Dokument 102 abgewandten Seite. Entsprechend könnte die optische Dicke das Auflageglases für die Berechnung des idealen Fokuspunktes für die Aufnahme des Dokuments berücksichtigt werden. Das heißt, bei einer optischen Dicke des Auflageglases von 0,5 cm würde der für die Fokussierhilfen 134 ermittelte Fokuswert um einen Faktor korrigiert, welcher der Verschiebung der Fokuseben um 0,5 cm in die entsprechende Richtung entspricht.

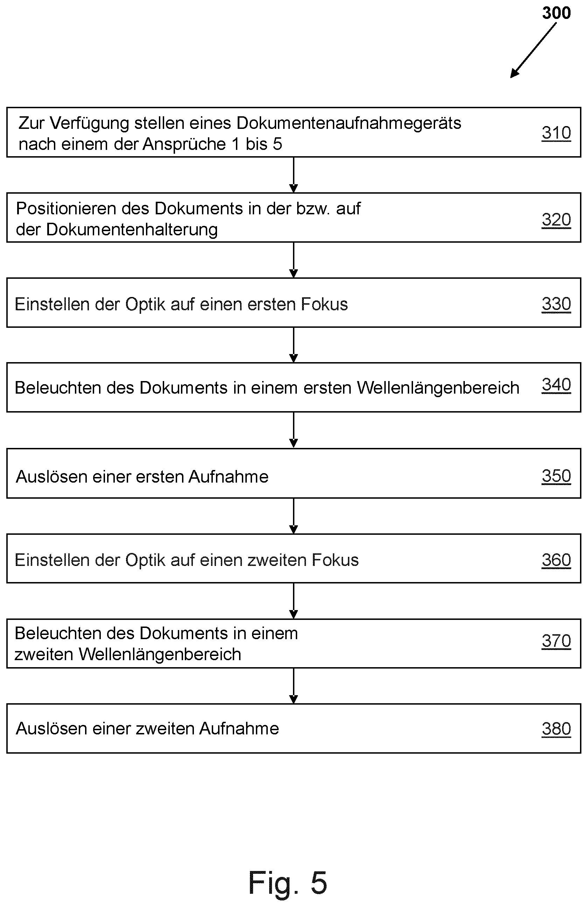

Figur 5 zeigt ein Flussdiagramm eines exemplarischen Verfahrens 300 zum optischen Aufnehmen eines Dokuments, wobei in Block 310 ein erfindungsgemäßes Dokumentenaufnahmegerät nach einem der Ansprüche 1 bis 5 zur Verfügung gestellt wird. In Block 320 wird das Dokument in der beziehungsweise auf der Dokumentenhalterung positioniert. In Block 330 wird die Optik auf einen ersten Fokus eingestellt, bspw. den idealen Fokus für eine Beleuchtung mit Weißlicht. In Block 340 wird das Dokument in einem ersten Wellenlängenbereich beleuchtet, in diesem Beispiel mit Weißlicht. In Block 350 wird eine erste optische Aufnahme ausgelöst. In Block 360 wird die Optik auf einen zweiten Fokus eingestellt, bspw. den idealen Fokus für eine Beleuchtung mit Infrarotlicht. In Block 370 wird das Dokument in einem zweiten Wellenlängenbereich beleuchtet, in diesem Beispiel mit Infrarotlicht. In Block 380 wird eine zweite optische Aufnahme ausgelöst. Auf diese Weise könnten zwei Aufnahmen erhalten werden, die jeweils bei unterschiedlichen Beleuchtungen gemacht worden sind, wobei durch das für die jeweilige Beleuchtung spezifische Einstellen des Fokus vor jeder optischen Aufnahme die Abbildungsschärfe der beiden Aufnahmen besonders hoch sein könnte.

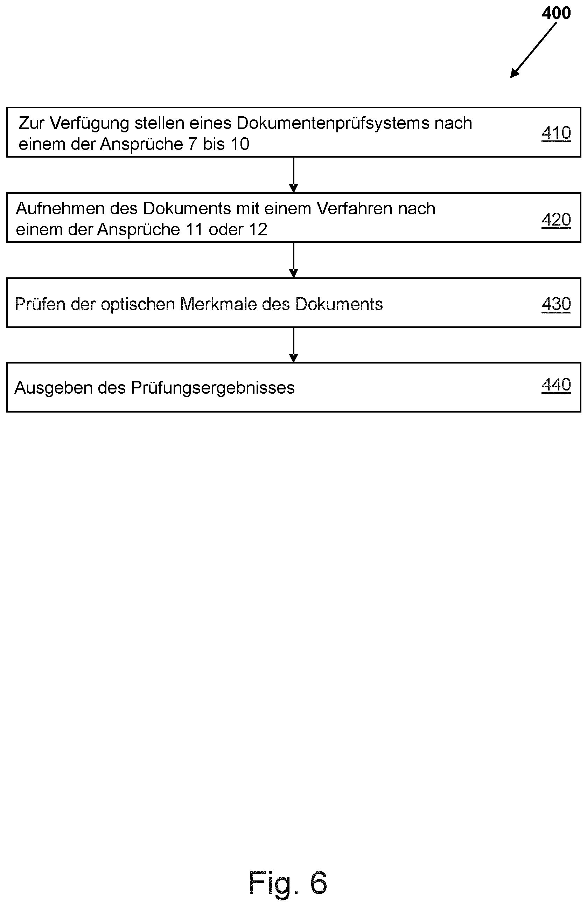

Figur 6 zeigt ein Flussdiagramm eines exemplarischen Verfahrens 400 zum Prüfen eines Dokuments, wobei in Block 410 ein erfindungsgemäßes Dokumentenprüfsystem nach einem der Ansprüche 7 bis 10 zur Verfügung gestellt wird. In Block 420 wird das Dokument mit einem Verfahren zur optischen Aufnahme eines Dokuments nach einem der Ansprüche 11 oder 12 aufgenommen. In Block 430 werden die optischen Merkmale des Dokuments geprüft. Dies erfolgt bspw. durch die elektronische Auswertungsvorrichtung mittels Bildanalyseverfahren, bspw. auch unter Zuhilfenahme von maschinellem Lernen. In Block 440 wird das Prüfungsergebnis ausgegeben. Die Ausgabe kann beispielsweise über ein Display erfolgen oder alternativ beziehungsweise zusätzlich auch per akustischer Meldung. Auf diese Weise könnte die Echtheit eines Dokuments zuverlässig und einfach überprüft werden, wobei die Zuverlässigkeit der Echtheitsprüfung durch die hohe Abbildungsschärfe der einzelnen Aufnahmen aufgrund der beleuchtungsspezifischen Fokuseinstellungen erhöht sein könnte.

Obwohl die Erfindung in den Figuren und der vorstehenden Beschreibung ausführlich veranschaulicht und beschrieben ist, ist diese Veranschaulichung und Beschreibung als beispielhaft und nicht einschränkend zu betrachten. Die Erfindung ist nicht auf die offenbarten Beispiele beschränkt.

Andere Variationen der offengelegten Beispiele können von den Fachleuten bei der Ausführung der beanspruchten Erfindung anhand der Zeichnungen, der Beschreibung und der beigefügten Ansprüche verstanden und ausgeführt werden. In den Ansprüchen schließt das Wort "umfassend" andere Elemente oder Schritte nicht aus, und der unbestimmte Artikel "ein" schließt eine Mehrzahl nicht aus. Die bloße Tatsache, dass bestimmte Merkmale in voneinander abweichenden abhängigen Ansprüchen genannt werden, bedeutet nicht, dass eine Kombination dieser Merkmale nicht vorteilhaft sein kann. Etwaige Bezugszeichen in den Ansprüchen sollten nicht als Einschränkung des Schutzbereichs ausgelegt werden.

Unter "optisch erfassbaren Echtheitsmerkmalen", wie hier verwendet, werden beispielsweise verstanden:
- Guillochen: Guillochen werden mit Hilfe von so genanntem Liniendruck auf das Dokument aufgedruckt. Sie bestehen im Allgemeinen aus in verschiedenen Farben übereinander gedruckten Wellen- und Schleifenmustern;
- Mikro-Schrift: Hierbei handelt es sich um aufgedruckte Schriftzüge in kleinster Schrift. Mit bloßem Auge lässt sich die Mikro-Schrift kaum erkennen. Beispielsweise ist Mikro-Schrift auf den Euro-Banknoten als Bildelement in die Motive eingearbeitet. Mit Hilfe einer Lupe kann die Mikro-Schrift gelesen werden;
- Aufdruck eines Metameren Systems: Aufgrund metamerer Farbgleichheit können unterschiedliche spektrale Zusammensetzungen des Lichts bei Menschen den gleichen Farbeindruck hervorrufen und zum Beispiel mittels Farbfiltern oder variablen Beleuchtungsquellen optisch wahrnehmbar gemacht werden;
- Aufdruck mit Fluoreszenz-, Phosphoreszenz- und/oder Up-Conversion-Farben;
- Aufdruck mit Infrarot-Farbe: Die Farbe wird nur unter Infrarot-Strahlung für Lesegeräte mit entsprechenden Sensoren detektierbar. Beispielsweise sind Euro-Banknoten oder Reisepässe verschiedener Länder mit diesem optischen Sicherheitsmerkmal ausgestattet;
- Barcode, insbesondere ein- oder zweidimensionale Barcodes, monochrom oder mehrfarbig;
- Hologramm und Kinegram (transparent oder reflektierend);
- Wasserzeichen;
- digitale Wasserzeichen, die eine sichtbare und/oder maschinell auslesbare Information tragen.

Unter einer "Aufnahme", wie hier verwendet, ist eine optische Aufnahme, das heißt ein optisches Abbild zu verstehen, das eine visuelle Repräsentation eines Objekts, bspw. eines Dokuments, darstellt.

Ein einzelner Prozessor oder eine andere Einheit kann die Funktionen mehrerer in den Ansprüchen genannter Elemente erfüllen. Ein Computerprogramm kann auf einem geeigneten Medium gespeichert/verteilt werden, beispielsweise auf einem optischen Speichermedium oder einem Festkörpermedium, das zusammen mit oder als Teil anderer Hardware geliefert wird, es kann aber auch in anderer Form verteilt werden, beispielsweise über das Internet oder andere drahtgebundene oder drahtlose Telekommunikationssysteme.

Wie der Fachmann verstehen wird, können Aspekte der vorliegenden Erfindung in Form einer Vorrichtung, eines Verfahrens oder eines Computerprogrammprodukts verkörpert werden. Dementsprechend können Aspekte der vorliegenden Erfindung die Form einer reinen Hardware-Variante, einer reinen Software-Variante (einschließlich Firmware, residenter Software, Mikrocode usw.) oder einer Variante annehmen, die Software- und Hardware-Aspekte kombiniert, die hier allgemein als "Schaltung", "Modul" oder "System" bezeichnet werden können. Darüber hinaus können Aspekte der vorliegenden Erfindung die Form eines Computerprogrammprodukts annehmen, das in einem oder mehreren computerlesbaren Medium(en) mit darauf verkörpertem computerausführbarem Code verkörpert ist.

Es kann eine beliebige Kombination aus einem oder mehreren computerlesbaren Medien verwendet werden. Das computerlesbare Medium kann ein computerlesbares Signalmedium oder ein computerlesbares Speichermedium sein. Ein "computerlesbares Speichermedium", wie es hier verwendet wird, umfasst jedes greifbare Speichermedium, das Befehle speichern kann, die von einem Prozessor oder einem Rechensystem einer Computereinheit ausführbar sind. Das computerlesbare Speichermedium kann als computerlesbares nichttransitorisches Speichermedium bezeichnet werden. Das computerlesbare Speichermedium kann auch als greifbares computerlesbares Medium bezeichnet werden. In einigen Beispielen kann ein computerlesbares Speichermedium auch in der Lage sein, Daten zu speichern, auf die das Prozessor- bzw. Rechensystem der Computereinheit zugreifen kann. Beispiele für computerlesbare Speichermedien sind unter anderem: eine Diskette, ein magnetisches Festplattenlaufwerk, eine Solid-State-Festplatte, ein Flash-Speicher, ein USB-Stick, ein Direktzugriffsspeicher (engl.: Random Access Memory/RAM), ein Festwertspeicher (engl.: Read Only Memory/ROM), eine optische Disk, eine magneto-optische Disk und die Registerdatei des Prozessor- bzw. Rechensystems. Beispiele für optische Disks sind Compact Disks (CD) und Digital Versatile Disks (DVD), beispielsweise CD-ROM-, CD-RW-, CD-R-, DVD-ROM-, DVD-RW- oder DVD-R-Disks. Der Begriff "computerlesbares Speichermedium" bezieht sich auch auf verschiedene Arten von Aufzeichnungsmedien, auf die die Computereinheit über ein Netzwerk oder eine Kommunikationsverbindung zugreifen kann. Beispielsweise können Daten über ein Modem, über das Internet oder über ein lokales Netzwerk abgerufen werden. Computerlesbarer bzw. computerausführbarer Code, der auf einem computerlesbaren Medium verkörpert ist, kann über jedes geeignete Medium übertragen werden, einschließlich, aber nicht beschränkt auf drahtlose Übertragung, drahtgebundene Übertragung, Glasfaserkabel, Hochfrequenzübertragung usw., oder über eine geeignete Kombination der vorgenannten Medien.

Ein computerlesbares Signalmedium kann ein sich ausbreitendes Datensignal mit einem darin verkörperten computerausführbaren Code enthalten, beispielsweise in einem Basisband oder als Teil einer Trägerwelle. Ein solches übertragenes Signal kann eine beliebige Form annehmen, einschließlich, aber nicht beschränkt auf, elektromagnetische oder optische Signale oder eine geeignete Kombination davon. Ein computerlesbares Signalmedium kann ein beliebiges computerlesbares Medium sein, das kein computerlesbares Speichermedium ist und das ein Programm zur Verwendung durch oder in Verbindung mit einem Befehlsausführungssystem, - apparat oder -gerät übermitteln, verbreiten oder transportieren kann.

Ein "Computerspeicher", "Speichereinheit" oder "Speicher" ist ein Beispiel für ein computerlesbares Speichermedium. Ein Computerspeicher ist jeder Speicher, auf den ein Prozessor- bzw. Rechensystem direkt zugreifen kann.

Ein "Prozessorsystem", eine "Prozessoreinheit", ein "Rechensystem" oder eine "Recheneinheit", wie hier verwendet, umfasst eine elektronische Komponente, die in der Lage ist, ein Programm oder einen maschinenausführbaren Befehl oder einen computerausführbaren Code auszuführen. Verweise auf das Prozessorsystem bzw. Rechensystem, das ein Beispiel "ein Prozessorsystem" oder "ein Rechensystem" umfasst, sind so zu verstehen, dass das Beispiel möglicherweise mehr als ein Prozessorsystem, eine Prozessoreinheit, ein Rechensystem, eine Recheneinheit oder einen Prozessorkern umfasst. Bei dem Prozessorsystem bzw. Rechensystem kann es sich zum Beispiel um einen Mehrkernprozessor handeln. Ein Prozessorsystem, eine Prozessoreinheit, ein Rechensystem, eine Recheneinheit kann sich auch auf eine Ansammlung von Prozessoreinheiten bzw. Recheneinheiten innerhalb eines einzigen Computersystems oder verteilt auf mehrere Computersysteme beziehen. Der Begriff "Prozessorsystem", "Prozessoreinheit", "Rechensystem" oder "Recheneinheit" sollte auch so interpretiert werden, dass er sich möglicherweise auf eine Ansammlung oder ein Netz von Rechenvorrichtungen bezieht, die jeweils einen Prozessor oder ein Rechensystem umfassen. Der maschinenausführbare Code oder die Anweisungen können von mehreren Rechnersystemen oder Prozessoren ausgeführt werden, die sich innerhalb derselben Rechenvorrichtung befinden oder sogar über mehrere Rechenvorrichtungen verteilt sein können.

Maschinenlesbare bzw. maschinenausführbare Instruktionen oder computerlesbarer Code bzw. computerausführbarer Code können Anweisungen oder ein Programm umfassen, das einen Prozessor oder ein anderes Rechensystem veranlasst, einen Aspekt der vorliegenden Erfindung auszuführen. Computerausführbarer Code zur Durchführung von Operationen für Aspekte der vorliegenden Erfindung kann in einer beliebigen Kombination aus einer oder mehreren Programmiersprachen, einschließlich einer objektorientierten Programmiersprache wie Java, Smalltalk, C++ oder ähnlichen und herkömmlichen prozeduralen Programmiersprachen wie der Programmiersprache "C" oder ähnlichen Programmiersprachen, geschrieben und in maschinenausführbare Anweisungen kompiliert werden. In einigen Fällen kann der computerausführbare Code in Form einer Hochsprache oder in vorkompilierter Form vorliegen und in Verbindung mit einem Interpreter verwendet werden, der die maschinenausführbaren Befehle im laufenden Betrieb erzeugt. In anderen Fällen können die maschinenausführbaren Befehle oder der computerausführbare Code in Form einer Programmierung für programmierbare Logikgatter-Arrays vorliegen.

Der ausführbare Computercode kann vollständig auf der Computereinheit des Nutzers, teilweise auf der Computereinheit des Nutzers, als eigenständiges Softwarepaket, teilweise auf der Computereinheit des Nutzers und teilweise auf einer entfernten Computereinheit oder vollständig auf der entfernten Computereinheit oder Server ausgeführt werden. Im letztgenannten Fall kann die entfernte Computereinheit mit der Computereinheit des Nutzers über ein beliebiges Netz verbunden sein, einschließlich eines lokalen Netzes (LAN) oder eines Weitverkehrsnetzes (WAN), oder die Verbindung kann mit einer externen Computereinheit hergestellt werden (beispielsweise über das Internet mit Hilfe eines Internetdienstanbieters).

Diese maschinenausführbaren Anweisungen oder Computerprogrammanweisungen können auch in einem computerlesbaren Medium gespeichert werden, das einen Computer, ein anderes programmierbares Datenverarbeitungsgerät oder andere Vorrichtungen anweisen kann, in einer bestimmten Weise zu funktionieren, so dass die in dem computerlesbaren Medium gespeicherten Instruktionen einen Herstellungsgegenstand erzeugen, der Anweisungen enthält, die die in dem Flussdiagramm und/oder dem Blockdiagrammblock oder den Blöcken angegebene Funktion/Aktion ausführen.

Die maschinenlesbaren bzw. maschinenausführbaren Anweisungen oder Computerprogramminstruktionen können auch auf einen Computer, ein anderes programmierbares Datenverarbeitungsgerät oder andere Geräte geladen werden, um eine Reihe von Verfahrensschritten zu veranlassen, die auf dem Computer, einem anderen programmierbaren Gerät oder anderen Geräten ausgeführt werden, um einen computerimplementierten Prozess zu erzeugen, so dass die Anweisungen, die auf dem Computer oder einem anderen programmierbaren Gerät ausgeführt werden, Prozesse zur Implementierung der im Flussdiagramm und/oder Blockdiagrammblock oder den Blöcken angegebenen Funktionen/Aktionen bereitstellen.

### LISTE DER BEZUGSZEICHEN

- 100: Dokumentenaufnahmegerät
- 102: Dokument
- 110: Kamera
- 112: Bildsensor
- 114: Optik
- 120: Beleuchtungsmittel
- 130: Dokumentenhalterung
- 132: Rand
- 134: Fokussierhilfen
- 140: elektronische Steuerung
- 150: Spiegel
- 160: Temperatursensor

- 200: Dokumentenprüfsystem
- 210: elektronische Auswertungsvorrichtung

- 300: Verfahren zum optischen Aufnehmen eines Dokuments
- 310: Zur Verfügung stellen eines Dokumentenaufnahmegeräts
- 320: Positionieren des Dokuments
- 330: Einstellen der Optik auf einen ersten Fokus
- 340: Beleuchten des Dokuments in einem ersten Wellenlängenbereich
- 350: Auslösen einer ersten optischen Aufnahme
- 360: Einstellen der Optik auf einen zweiten Fokus
- 370: Beleuchten des Dokuments in einem zweiten Wellenlängenbereich
- 380: Auslösen einer zweiten optischen Aufnahme

- 400: Verfahren zum Prüfen eines Dokuments
- 410: Zur Verfügung stellen eines Dokumentenprüfsystems
- 420: Aufnehmen des Dokuments
- 430: Prüfen der optischen Merkmale des Dokuments
- 440: Ausgeben des Prüfungsergebnisses

## Patentansprüche

1. Dokumentenaufnahmegerät (100) zur optischen Erfassung eines Dokuments mit folgenden Merkmalen:
- eine Kamera, wobei die Kamera (110) einen Bildsensor (112) und eine Optik (114) aufweist, wobei die Optik (114) einen einstellbaren Fokus aufweist,
- ein Beleuchtungsmittel (120), wobei das Beleuchtungsmittel (120) zum Beleuchten mit zumindest zwei unterschiedlichen Wellenlängenbereichen konfiguriert ist,
- eine Dokumentenhalterung (130),
- eine elektronische Steuerung (140), wobei die elektronische Steuerung (140) so konfiguriert ist, dass sie die Optik (114) der Kamera (110) und das Beleuchtungsmittel (120) zumindest für eine erste optische Aufnahme mit Beleuchtung in einem ersten Wellenlängenbereich und einem ersten Fokus und für eine zweite optische Aufnahme mit Beleuchtung in einem zweiten Wellenlängenbereich und einem zweiten Fokus ansteuern kann.

2. Dokumentenaufnahmegerät (100) nach Anspruch 1, mit einem Spiegel (150), wobei der Spiegel (150) so konfiguriert ist, dass er das von dem Dokument (102) ausgehende Licht auf die Optik (114) reflektiert.

3. Dokumentenaufnahmegerät (100) nach einem der Ansprüche 1 oder 2, wobei der Bildsensor (112) ein Farbsensor mit einer Bildauflösung ≥ 5 Megapixel, insbesondere ≥ 12 Megapixel ist.

4. Dokumentenaufnahmegerät (100) nach einem der vorhergehenden Ansprüche, wobei sich der erste Wellenlängenbereich von 380 nm bis 800 nm und der zweite Wellenlängenbereich von 780 nm bis 1000 nm erstreckt.

5. Dokumentenaufnahmegerät (100) nach einem der vorhergehenden Ansprüche, wobei die Dokumentenhalterung (130) ein Auflageglas ist und wobei das Auflageglas Fokussierhilfen (134) aufweist, die insbesondere in Form von Markierungen am Rand der Fläche des Auflageglases angebracht sind, die sich gegenüber der Fläche befindet, auf welche das Dokument (102) gelegt wird.

6. Dokumentenaufnahmegerät (100) nach einem der vorhergehenden Ansprüche mit einem Temperatursensor (160), wobei die elektronische Steuerung den Fokus der Optik (114) in Abhängigkeit einer vom Temperatursensor (160) gemessenen Temperatur wählt und wobei die elektronische Steuerung (140) einen Speicher aufweist, wobei der Speicher Steuerungsparameter für die Steuerung der Kamera (110), insbesondere Fokuswerte für Aufnahmen unter Beleuchtung mit unterschiedlichen Wellenlängenbereichen und bei unterschiedlichen Temperaturen, beinhaltet.

7. Dokumentenprüfsystem (200) mit
- einem Dokumentenaufnahmegerät (100) nach einem der vorgehenden Ansprüche
- einer elektronischen Auswertungsvorrichtung (210), wobei die elektronische Auswertungsvorrichtung (210) so konfiguriert ist, dass sie die optischen Aufnahmen des Dokumentenaufnahmegeräts (100) empfangen und auswerten kann.

8. Dokumentenprüfsystem (200) nach Anspruch 7, wobei die elektronische Auswertungsvorrichtung (210) so konfiguriert ist, dass sie anhand der ausgewerteten Aufnahmen eine Prüfung der Echtheit des Dokuments (102) durchführen kann.

9. Dokumentenprüfsystem (200) nach einem der Ansprüche 7 oder 8 mit einem RFID-Lesegerät, wobei das RFID-Lesegerät so konfiguriert ist, dass es elektronisch in dem Dokument (102) gespeicherte Daten auslesen kann, insbesondere dadurch, dass ein Lesezugriff auf die elektronisch in dem Dokument (102) gespeicherten Daten durch eine Auswertung der optischen Aufnahmen durch die elektronische Auswertungsvorrichtung (210) erlangt wird, insbesondere ist der Lesezugriff durch ein Basic Access Control (BAC)-Protokoll und/oder ein Extended Access Control (EAC)-Protokoll beschränkt, und wobei eine Prüfung der ausgelesenen elektronisch in dem Dokument (102) gespeicherten Daten durch die elektronische Auswertungsvorrichtung (210) erfolgen kann.

10. Dokumentenprüfsystem (200) nach Anspruch 9, wobei die elektronische Auswertungsvorrichtung (210) so konfiguriert ist, dass sie anhand der ausgewerteten optischen Aufnahmen und der ausgelesenen elektronisch in dem Dokument (102) gespeicherte Daten eine Prüfung der Echtheit des Dokuments (102) durchführen kann.

11. Verfahren (300) zum optischen Aufnehmen eines Dokuments mit folgenden Schritten:
- Zur Verfügung stellen eines Dokumentenaufnahmegeräts nach einem der Ansprüche 1 bis 5,
- Positionieren des Dokuments in der bzw. auf der Dokumentenhalterung,
- Einstellen der Optik auf einen ersten Fokus,
- Beleuchten des Dokuments in einem ersten Wellenlängenbereich,
- Auslösen einer ersten optischen Aufnahme,
- Einstellen der Optik auf einen zweiten Fokus,
- Beleuchten des Dokuments in einem zweiten Wellenlängenbereich,
- Auslösen einer zweiten optischen Aufnahme.

12. Verfahren (300) zum optischen Aufnehmen eines Dokuments nach Anspruch 11, wobei ein Dokumentenaufnahmegerät nach Anspruch 6 zur Verfügung gestellt wird und der Fokus jeweils in Abhängigkeit der vom Temperatursensor gemessenen Temperatur gewählt wird.

13. Verfahren (300) zum optischen Aufnehmen eines Dokuments nach Anspruch 12 mit den zusätzlichen Schritten:
- Zur Verfügung stellen eines Dokumentenprüfsystems nach einem der Ansprüche 7 bis 10, wobei die Dokumentenhalterung des Dokumentenaufnahmegeräts ein Auflageglas ist und wobei das Auflageglas Fokussierhilfen aufweist, die insbesondere in Form von Markierungen am Rand der Fläche des Auflageglases angebracht sind, die sich gegenüber der Fläche befindet, auf welche das Dokument gelegt wird,
- Auslesen des Temperatursensors und Speichern des Temperaturwerts,
- Auswerten der optischen Aufnahmen und Ermitteln desjenigen Fokuswerts, bei dem die Fokussierhilfen mit der höchsten Abbildungsschärfe aufgenommen worden sind,
- Berechnen desjenigen Fokuswerts, bei dem unter Berücksichtigung des Abstandes der Fokussierhilfen zu einem in/auf der Dokumentenhalterung positionierten Dokument das Dokument mit der höchsten Abbildungsschärfe aufgenommen wird,
- Vergleichen des berechneten Fokuswerts mit dem für die entsprechende Kombination aus Temperatur und Wellenlängenbereich der Beleuchtung hinterlegten Fokuswerts,
- Ersetzen des für den ersten und/oder den zweiten Fokus hinterlegten Fokuswerts, falls der berechnete Fokuswert außerhalb einer vorgegebenen Toleranzschwelle liegt.

14. Verfahren (400) zum Prüfen eines Dokuments mit folgenden Schritten:
- Zur Verfügung stellen eines Dokumentenprüfsystems nach einem der Ansprüche 7 bis 10,
- optisches Aufnehmen des Dokuments mit einem Verfahren nach einem der Ansprüche 11 oder 12,
- Prüfen der optischen Merkmale des Dokuments,
- Ausgeben des Prüfungsergebnisses.

15. Verfahren (400) zum Prüfen eines Dokuments nach Anspruch **14** mit den zusätzlichen Schritten:
- Zur Verfügung stellen eines Dokumentenprüfsystems nach Anspruch 9,
- Auslesen der elektronisch in dem Dokument gespeicherten Daten,
- Prüfen der ausgelesenen elektronisch in dem Dokument gespeicherten Daten,
- Ausgeben eines Gesamtprüfungsergebnisses, wobei das Gesamtprüfungsergebnis die Ergebnisse der Prüfung der optischen Merkmale und der Prüfung der elektronisch in dem Dokument gespeicherten Daten berücksichtigt.
